(19) Europäisches Patentamt
European Patent Office
Office européen des brevets

(11) Veröffentlichungsnummer: **0 011 280**
**A1**

(12) # EUROPÄISCHE PATENTANMELDUNG

(21) Anmeldenummer: **79104476.1**

(22) Anmeldetag: **13.11.79**

(51) Int. Cl.³: **C 07 F 7/22**
C 08 K 5/57, C 08 L 27/00

(30) Priorität: **18.11.78 DE 2850150**

(43) Veröffentlichungstag der Anmeldung:
**28.05.80 Patentblatt 80/11**

(84) Benannte Vertragsstaaten:
**CH DE GB NL**

(71) Anmelder: **HOECHST AKTIENGESELLSCHAFT**
**Zentrale Patentabteilung Postfach 80 03 20**
**D-6230 Frankfurt/Main 80(DE)**

(72) Erfinder: **Korbanka, Helmut, Dr.**
**Birkenstrasse 24**
**D-8901 Adelsried(DE)**

(72) Erfinder: **Scheidl, Franz, Dr.**
**Hans-Fischer-Strasse 4**
**D-8906 Gersthofen(DE)**

(54) **Verfahren zur Herstellung von Organozinntrihalogeniden und ihre Verwendung.**

(57) Herstellung von Monoorganozinntrihalogeniden der Formel (I)

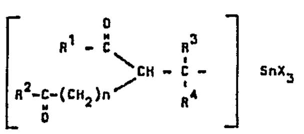

in denen $R^1$ und $R^2$ gleich oder verschieden sind und die Bedeutung von OH, Halogen, Amino, Alkylamino, O-Alkyl oder O-Aryl haben

$R^3$ und $R^4$ ebenfalls gleich oder verschieden sind und für null bis zwei H-Atome sowie Alkylreste mit 1 bis 20 C-Atomen stehen,
n = 1, 2 oder 3 und
X = Chlor, Brom oder Jod ist,

durch Umsetzen eines Olefins der Formel (II)

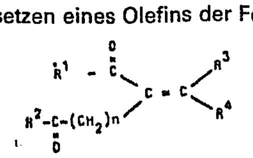

MIT Zinn-(II)-halogenid und wäßrigem oder gasförmigen Halogenwasserstoff bei temperaturen zwischen 0 und 150 °C. Die Organozinntrihalogenide stellen Zwischenprodukte bei der Herstellung von Pflanzenschutz- und Schädlingsbekämpfungsmitteln und Ausgangsprodukte zur Herstellung von Wäremstabilisatoren für die Kunststoffverarbeitung dar.

EP 0 011 280 A1

Croydon Printing Company Ltd.

HOECHST AKTIENGESELLSCHAFT HOE 78/F 824 Dr.Mb/Lr

Verfahren zur Herstellung von Organozinntrihalogeniden und ihre Verwendung

Die Erfindung betrifft ein Verfahren zur Herstellung von Organozinntrihalogeniden und deren Verwendung als Ausgangsmaterialien für Organozinnstabilisatoren, die ihrerseits zum Stabilisieren halogenhaltiger Polymerer dienen.

Die bekannten technischen Verfahren zur Herstellung von Organozinnhalogeniden, wie Monomethylzinntrichlorid, Monobutylzinntrichlorid oder Monooctylzinntrichlorid sind sehr aufwendig, z. T. gefährlich und auch kostspielig, da sie auf der Grignard-, Aluminiumalkyl- oder Wurtz-Synthese basieren. Nach diesen Synthesen werden aus Alkyl- oder Arylchloriden und Zinntetrachlorid (Grignard, Wurtz) bzw. aus Aluminiumalkylen und Zinntetrachlorid Tetraalkyl- oder Tetraarylverbindungen hergestellt, die dann durch Komproportionierungsverfahren mit Zinntetrachlorid in die gewünschten Tri-, Di- und Monoorganozinnchloride überführt werden.

Eine weitere Möglichkeit zur Herstellung von bestimmten Organozinntrihalogeniden besteht darin, Zinn-II-halogenid und Halogenwasserstoff mit aktivierten Olefinen umzusetzen. Es sind dies Olefine der allgemeinen Formel

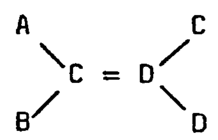 ,

in der B, C und D für Wasserstoff oder einen Kohlenwasserstoffrest stehen und der Rest A, gegebenenfalls aber auch noch der Rest B, eine der olefinischen Doppelbindung benachbarte Carbonylgruppe enthält (DE-OS 2 540 210). Die nach diesem Verfahren in hohen Ausbeuten herstellbaren Organozinntrihalogenide sind jedoch in manchen Fällen, insbesondere wenn bei höheren Temperaturen umgesetzt wird, durch in Nebenreaktionen gebildete Polymere der Ausgangsolefine verunreinigt, und diese Nebenprodukte lassen sich praktisch nicht abtrennen. Wenn sie im Verlauf der Weiterverarbeitung der Organozinnhalogenide auf Organozinnstabilisatoren mit diesen in Kunststoffmassen gelangen, führt dies zu im allgemeinen unerwünschten Trübungen der Massen.

Es wurde nun gefunden, daß bei Einsatz andersartiger Olefine, die zwar in Nachbarstellung zur olefinischen Doppelbindung ebenfalls eine Carbonylgruppe enthalten, jedoch zusätzlich durch mindestens eine, der Doppelbindung nicht benachbarte Carboxylatgruppe substituiert sind, überraschenderweise von Polymerisaten der betreffenden Olefine freie Organozinntrihalogenide mit nicht vorhersehbar hohen Umsätzen herstellbar sind.

Die Erfindung betrifft somit ein Verfahren zur Herstellung von Organozinnhalogeniden der allgemeinen Formel (I)

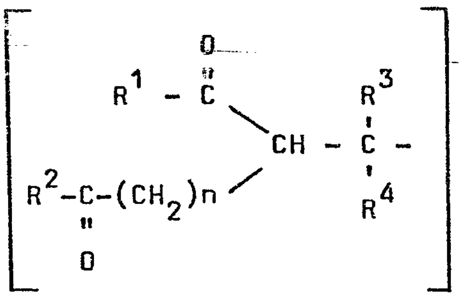 $SnX_3$ (I),

in der

$R^1$ und $R^2$ gleich oder verschieden sind und die Bedeutung von OH, Halogen, $NH_2$, Alkylamino, Arylamino, O-Alkyl oder O-Aryl haben, wobei die beiden letztgenannten Reste auch aryl- bzw. alkylsubstituiert sein können und sowohl als solche als auch in der aryl- bzw. alkylsubstituierten Form als zusätzliche Substituenten noch Halogen oder eine Hydroxyl-, Thioäther-, Äther- und/oder Carboxylgruppe tragen können,

$R^3$ und $R^4$ gleich oder verschieden sein können und die Bedeutung von 0 bis 2 Wasserstoffatomen sowie Alkylresten mit 1 bis 20 C-Atomen haben,

n die Zahl 1, 2 oder 3 bedeutet und

X für Chlor, Brom oder Jod steht, welches dadurch gekennzeichnet ist, daß man ein Olefin der allgemeinen Formel (II)

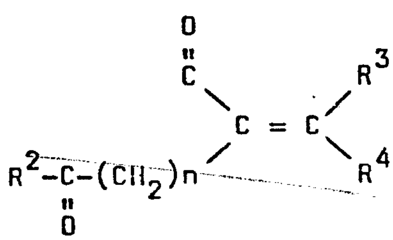 (II),

in der die Reste $R^1$ bis $R^4$ sowie n die oben angegebene Bedeutung haben, mit Zinn-II-halogenid und wäßrigem

oder gasförmigem Halogenwasserstoff, gegebenenfalls in Gegenwart eines inerten Lösungsmittels bei Temperaturen zwischen etwa 0 und 150 °C miteinander umsetzt.

Die erfindungsgemäße Arbeitsweise stellt gegenüber dem in der nicht vorveröffentlichten DE-OS 2 735 757 beschriebenen Verfahren, nach welchem durch Umsetzen der gleichen Olefine mit metallischem Zinn und Halogenwasserstoff Gemische aus Organozinndi- und trihalogeniden entstehen, dann einen wesentlichen Vorteil dar, wenn man nur auf die Organozinntrihalogenide Wert legt, da die Trennung der genannten Gemische in den meisten Fällen recht aufwendig ist.

Die Herstellung der Organozinnhalogenide erfolgt in Anlehnung an die Arbeitsweise der DE-OS 2 540 210, nach welcher Organozinntrihalogenide aus Olefinen wie Acrylsäureestern, Crotonsäureestern usf., Zinn-II-halogenid und Halogenwasserstoff zugänglich sind, indem anstelle der dort eingesetzten Olefine Alkene der allgemeinen Formel (II) eingesetzt werden.

Typische Vertreter solcher Alkene sind z. B.:

A. 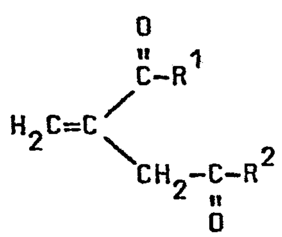 Itaconsäure und Derivate

B. 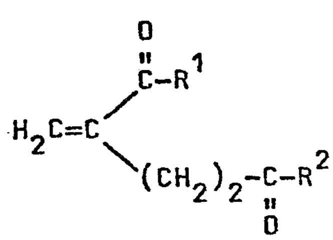 2-Methylenglutarsäure und Derivate

C. 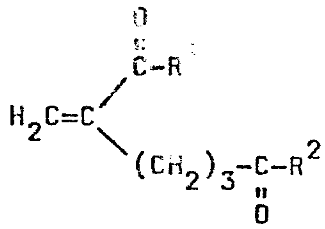 2-Methylenadipinsäure und Derivate

D. 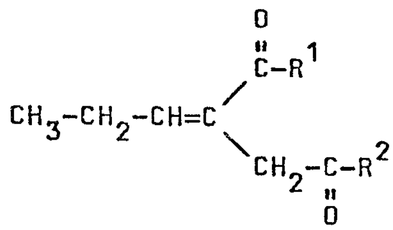 Propylidenbernsteinsäure und Derivate

E. 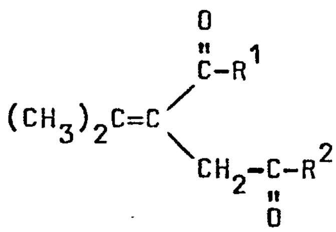 Teraconsäure und Derivate

Die Reste $R^1$ und $R^2$ können gleich oder verschieden sein und bei den Alkenen A bis E z. B. bedeuten:

$-OH$, $-Br$, $-Cl$, $-NH_2$, $-NH-$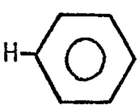, $-N(C_2H_5)_2$, $-OCH_3$, $-OC_2H_5$, $-OC_4H_9$,

$-OC_8H_{17}$, $-OC_{18}H_{37}$, $-OCH_2-CH_2Cl$, $-OCH_2-CH(OH)-C_7H_{15}$,

$-OCH_2-CH(OH)-CH_2-O-\underset{\underset{O}{\|}}{C}-C_{17}H_{35}$, $-OCH_2-CH_2-O-C_4H_9$,

$-OCH_2-CH_2-S-C_{12}H_{25}$, $-OCH_2-CH_2-$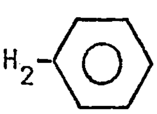 ,

$-OCH_2-CH_2-O-$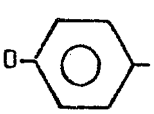$-C_9H_{19}$, $-O$ 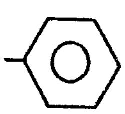 , $-O$ 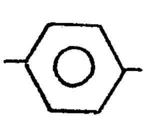$-Cl$,

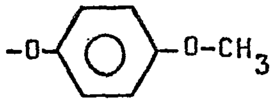, 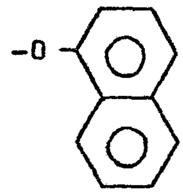

Bevorzugt sind die Olefine A, insbesondere die, in denen $R^1$ und $R^2$ zusammen mit der benachbarten Carbonylgruppe eine Estergruppierung darstellen und von diesen wiederum die niedrigen Alkylester.

Die mit guten Ausbeuten ablaufende Reaktion kann ohne Lösungsmittel oder in Lösungsmitteln wie Äthern, beispielsweise Diäthyläther, Tetrahydrofuran, Dioxan oder 1,2-Dimethoxyäthan, Estern wie Äthylacetat, Ketonen wie Aceton oder Äthylmethylketon, Alkoholen wie Methanol, Äthanol und Butanol, aromatischen Kohlenwasserstoffen wie Toluol, Xylol, Chlorbenzol usf., aliphatischen Kohlenwasserstoffen wie Benzinen, chlorhaltigen Aliphaten wie Chloroform und Tetrachlorkohlenstoff, in Wasser (als konz. Salzsäure) oder auch in einem Olefin-Überschuß durchgeführt werden.

Aus wirtschaftlichen Gründen ist die lösungsmittelfreie Arbeitsweise besonders günstig, da in diesem Falle die destillative Abtrennung des Lösungsmittels entfällt.

Der Halogenwasserstoff wird vorzugsweise in Gasform oder als wäßrige Lösung, vor allem als konzentrierte wäßrige Lösung, in die Reaktion eingebracht. Bevorzugt verwendet man Chlorwasserstoff in Verbindung mit Zinn-II-chlorid.

Die Umsetzung läßt sich bei Temperaturen zwischen 0 und 150 °C vornehmen, zweckmäßigerweise arbeitet man bei 0 bis 120 und vorzugsweise bei 20 bis 100 °C, gegebenenfalls auch unter Druck.

Das Verfahren wird entweder so durchgeführt, daß man das Olefin, das gegebenenfalls vorhandene Lösungsmittel und Zinn-II-halogenid vorlegt und Halogenwasserstoff einbringt (bevorzugte Arbeitsweise) oder das Olefin-Lösungsmittel-Gemisch mit Halogenwasserstoff sättigt und erst dann das Zinn-II-halogenid zugibt.

Im allgemeinen arbeitet man mit äquimolaren Mengen Olefin und Zinnhalogenid, man kann jedoch die eine oder andere Komponente auch im Überschuß einsetzen.

Die erfindungsgemäß erhältlichen Organozinnhalogenide stellen Monoorganozinntrihalogenide der allgemeinen Formel $(R)SnX_3$ dar, wobei hier unter dem Rest R die allgemeine Struktur

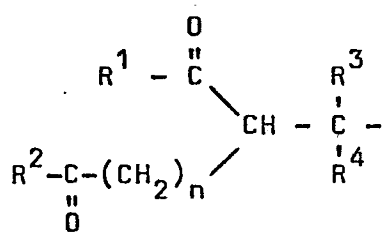

zu verstehen ist. Diese Struktur kann aus den analytischen und spektroskopischen Daten, dem Reaktionsverlauf und der Chemie dieser Olefine abgeleitet werden. Beispiele für $R^1$ bis $R^4$ sind weiter vorne bereits aufgezählt. Bevorzugt sind solche Organozinntrihalogenide, bei denen $R^1$ und $R^2$ gleich sind und die Bedeutung von O-Alkyl mit 1 bis 40, vorzugsweise 1 bis 30 und insbesondere 1 bis 20 Kohlenstoffatomen haben, $R^3$ und $R^4$ für Wasserstoff und X für Chlor stehen und n = 1 ist.

Die gemäß der Erfindung zugänglichen Organozinnhalogenide stellen wertvolle Zwischenprodukte für die Herstellung von z. B. Pflanzenschutz- und Schädlingsbekämpfungsmitteln, insbesondere aber von gut wirksamen Organozinnstabilisatoren für halogenhaltige Polymere, wie z. B. Chlorpolyäthylen, Hart- und Weichpolyvinylchlorid, Polyvinylidenchlorid, Polyvinylchloracetat und Vinylchlorid-α-Olefin-Copolymerisate dar.

Bei der Weiterverarbeitung in der letztgenannten Richtung substituiert man die an das Zinn gebundenen Halogenatome durch die in der Zinnstabilisatoren-Chemie bekannten Reste in Gegenwart von Halogenwasserstoffakzeptoren und erhält damit Organozinnstabilisatoren der allgemeinen Struktur (III)

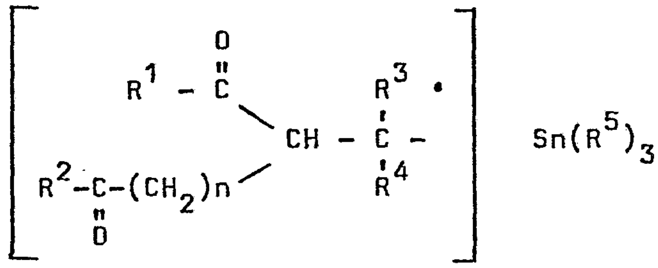

(III)

$R^1$ bis $R^4$ und n haben die für das Ausgangsmaterial angegebene Bedeutung, $R^5$ ist einer der an sich bekannten, in der Zinnstabilisatoren-Chemie stets verwendeten Reste, beispielsweise aus der Mercaptid-Reihe: $-S-C_8H_{17}$, $-S-C_{12}H_{25}$, $-S-C_{18}H_{37}$ usf., aus der Alkylthiocarboxylat-Reihe: $-S-(CH_2)_n-CO_2$-Alkyl (n = 1 und 2; Alkyl = Octyl, Lauryl, Octadecyl, 2-Hydroxy-octadecyl usf.), aus der Carboxylat-Reihe:

$-O-\overset{O}{\overset{\|}{C}}-$Alkyl (Alkyl = Heptyl, Undecyl, Heptadecyl usf.) und

aus der Partialester-Reihe: $-O\overset{O}{\overset{\|}{C}}-CH=CH-CO_2$-Alkyl (Alkyl = Methyl, Butyl, Octyl, Dodecyl usf.).

Die aus den erfindungsgemäß hergestellten Verbindungen erhältlichen Stabilisatoren werden in Mengen von 0,01 bis 10, vorzugsweise 0,1 bis 5 und insbesondere 0,5 bis 3 Gewichtsteilen, bezogen auf 100 Gewichtsteile Polymeres, eingesetzt.

Die folgenden Beispiele sollen die Erfindung weiter erläutern.

Beispiel 1

Ein mit Rühreinrichtung, Innenthermometer und einem Gaseinleitrohr ausgestatteter 1000-ml-Dreihalskolben wurde mit 79 g (0,5 Mol) Itaconsäuredimethylester, 94,9 g (0,5 Mol) wasserfreiem Zinn-II-chlorid und 300 ml 1,2-Dimethoxyäthan beschickt. Innerhalb von 5 Stunden wurden unter kräftigem Rühren und unter Kühlung bei einer Temperatur von 20 bis 25 °C gleichmäßig 5 l/h

trockener Chlorwasserstoff eingeleitet. Man rührte bei 20 bis 25 °C noch 10 Stunden weiter. Anschließend zog man unter Wasserstrahlvakuum das Lösungsmittel und den überschüssigen Chlorwasserstoff ab. Zurück blieb eine helle, kristalline Masse, die nur Spuren Zinn-II-chlorid enthielt.

| | |
|---|---|
| Ausbeute: | 191,8 g Organozinntrichlorid, Smp.: 145 - 147 °C |
| Analysen: | 27,7 % Gesamtchlor (ber.: 27,7 %) |
| | 27,7 % verseifbares Chlor |
| | 30,8 % Zinn (ber.: 30,9 %) |
| Jodzahl: | 0,3 g Jod/100 g Substanz |

Aus den Chloranalysen ergibt sich, daß kein Chlorwasserstoff an die Doppelbindung des Itaconsäuredimethylesters angelagert worden ist. Die gefundene Jodzahl beweist, daß praktisch kein Itaconsäureester mehr vorhanden ist.

Beispiel 2

In der in Beispiel beschriebenen Apparatur wurden 121 g (0,5 Mol) Itaconsäure-di-n-butylester, 94,9 g (0,5 Mol) Zinn-II-chlorid und 400 ml Diäthyläther vorgelegt.

Bei 20 - 25 °C wurden im Verlauf von sechs Stunden gleichmäßig insgesamt 24 l Chlorwasserstoffgas eingeleitet. Anschließend wurde 10 Stunden bei 20 - 25 °C weitergerührt. Nach der Aufarbeitung fiel eine helle, viskose, Zinn-II-chlorid-freie Flüssigkeit an.

| | |
|---|---|
| Ausbeute: | 234,0 g Organozinntrichlorid |
| Analysen: | 22,5 % Gesamtchlor (ber.: 22,7 %) |
| | 25,3 % Zinn (ber.: 25,3 %) |

<u>Beispiel 3</u>

In der in Beispiel 1 beschriebenen Apparatur wurden in einem 500-ml-Dreihalskolben 121,0 g (0,5 Mol) Itaconsäure-di-n-butylester und 94,9 g (0,5 Mol) wasserfreies Zinn-II-chlorid vorgelegt. Bei einer Temperatur von 100 °C wurden 10 Stunden lang 4 l/h trockener Chlorwasserstoff eingeleitet. Nach dieser Zeit war nur mehr ein geringer Rest Zinnchlorid vorhanden. Man löste das Reaktionsgemisch in 600 ml Toluol, filtrierte und destillierte die bis zu einer Temperatur von 140 °C/ 2 mbar flüchtigen Bestandteile ab, wonach eine gelbliche, bei Raumtemperatur viskose Flüssigkeit zurückblieb.

| | | |
|---|---|---|
| Ausbeuten: | 1,9 g | eines wasserlöslichen Niederschlages (= Zinn-II-chlorid) |
| | | Sn-II-chlorid-Umsatz 98 % |
| | 229,5 g | Organozinntrichlorid |

| | | |
|---|---|---|
| Analysen: | 22,8 % | Gesamtchlor (ber.: 22,7 %) |
| | 22,7 % | verseifbares Chlor |
| | 25,2 % | Zinn (ber.: 25,3 %) |

<u>Beispiel 4 (Vergleichsbeispiel)</u>

In der in Beispiel 1 beschriebenen Apparatur wurden in einem 250-ml-Dreihalskolben 64,0 g (0,5 Mol) Acrylsäure-n-butylester und 94,9 g (0,5 Mol) wasserfreies Zinn-II-chlorid vorgelegt. Bei einer Temperatur von 100 °C wurden 14 Stunden lang 4 l/h trockener Chlorwasserstoff eingeleitet. Nach dieser Zeit war noch ein merklicher Zinn-II-chlorid-Rest vorhanden. Das Reaktionsgemisch wurde in 600 ml Toluol gelöst und der Niederschlag abgesaugt. Aus dem Filtrat wurden bis zu einer Temperatur von 100 °C und einem Vakuum von 4 mbar die flüchtigen Bestandteile abdestilliert. Zurück blieb eine gelbliche, bei Raumtemperatur viskose Flüssigkeit.

Ausbeuten: 11,9 g eines wasserlöslichen Niederschlages (= Zinn-II-chlorid)
Sn-II-chlorid-Umsatz 87,5 %
158,3 g Organozinntrichlorid

Analysen: 29,6 % Gesamtchlor (ber.: 30,1 %)
29,4 % verseifbares Chlor
32,2 % Zinn (ber.: 33,4 %)

Aus diesem Beispiel geht hervor, daß ein gemäß DE-OS 2 540 210 hergestelltes Organozinntrichlorid nicht ganz die berechneten Chlor- und Zinnwerte erreicht. Dieses Ergebnis muß auf die Bildung von Polymeren (Poly-n-butylacrylate) zurückgeführt werden. Darüber hinaus ist der Zinn-II-chlorid-Umsatz im Vergleich zu Beispiel 3 trotz längerer Reaktionszeit deutlich schlechter.

Beispiel 5

In der in Beispiel 1 beschriebenen Apparatur wurden 121 g (0,5 Mol) Itaconsäure-di-n-butylester, 94,9 g (0,5 Mol) Zinn-II-chlorid und 500 ml Toluol vorgelegt und auf 80 °C erwärmt. Bei dieser Temperatur wurde 12 Stunden lang gasförmiger Chlorwasserstoff (5 l/h) eingeleitet. Nach dieser Zeit war kein Zinn-II-chlorid mehr vorhanden. Nach der Aufarbeitung blieb eine helle, viskose Flüssigkeit als Reaktionsprodukt zurück.

Ausbeute: 234,3 g Organozinntrichlorid

Analysen: 22,6 % Gesamtchlor (ber.: 22,7 %)
25,2 % Zinn (ber.: 25,3 %)

Beispiel 6

Nach der in Beispiel 3 beschriebenen Verfahrensweise wurden 128,0 g (0,5 Mol) 2-Methylenglutarsäure-di-n-butylester mit 94,9 g (0,5 Mol) Zinn-II-chlorid und 36,5 g (1 Mol) Chlorwasserstoff umgesetzt.

Ausbeute: 241,0 g Organozinnchlorid als bräunliche, viskose Flüssigkeit

Analysen: 22,0 % Gesamtchlor (ber.: 22,1 %)
24,5 % Zinn (ber.: 24,6 %)

Jodzahl: <1 g Jod/100 g Substanz

Beispiel 7

In einem mit Rühreinrichtung, Innenthermometer und Tropftrichter ausgestatteten 250-ml-Dreihalskolben wurden 60,5 g (0,25 Mol) Itaconsäure-di-n-butylester und 66,2 g (0,35 Mol) Zinn-II-chlorid vorgelegt. Bei einer Temperatur von etwa 20 °C wurden innerhalb von 1 Stunde 59,2 g 37 %ige, wäßrige Salzsäure, entsprechend 21,9 g (0,6 Mol) Chlorwasserstoff, zugetropft. Man rührte noch 10 Stunden bei Raumtemperatur weiter, extrahierte das Reaktionsgemisch mit 500 ml Toluol und trennte die Toluolphase ab. Bis 140 °C/2 mbar wurden die flüchtigen Bestandteile abgezogen. Es blieb eine bräunliche Flüssigkeit als Rückstand zurück.

Ausbeute: 89,6 g Organozinntrichlorid

Analysen: 21,6 % Gesamtchlor = verseifbares Chlor
24,8 % Zinn

Jodzahl: 1,0 g Jod/100 g Substanz

Beispiele 8 bis 13

Bei den in der folgenden Tabelle verzeichneten Beispielen wurde nach der in Beispiel 1 beschriebenen Methode gearbeitet. Es kamen stets 94,9 g (0,5 Mol) Zinn-II-chlorid zum Einsatz.

| Bsp. Nr. | Verfahrensbedingungen | | | | | Reaktionsprodukte | | | | |
|---|---|---|---|---|---|---|---|---|---|---|
| | Olefin | g | Mol | Lösungs-mittel +) | Reakt. temp.°C | g | % Cl | % Sn | JZ | Form |
| 8 | Itaconsäure | 65,0 | 0,5 | 4 | 80 | 177,5 | 28,1 | 32,1 | 1 | fest |
| 9 | Itaconsäurechlorid | 83,5 | 0,5 | 1 | 10 | 196,1 | 26,5 | 29,1 | - | flüssig |
| 10 | Itaconsäure-di-n-octylester | 177,0 | 0,5 | 2 | 80 | 289,9 | 18,1 | 20,1 | 0 | fest |
| 11 | Itaconsäure-di-anilid | 152,0 | 0,5 | 3 | 80 | 265,0 | 19,5 | 21,9 | - | fest |
| 12 | 2-Methylenglutarsäure-di-n-butylester | 177,0 | 0,5 | 4 | 60 | 241,5 | 22,0 | 24,3 | 0 | flüssig |
| 13 | Dimethyl-itaconsäure-di-n-butylester | 135,0 | 0,5 | 1 | 20 | 247,6 | 20,0 | 23,8 | 1 | flüssig |

+) Lösungsmittel: 1: Diäthyläther; 2: Toluol; 3: 1,2-Dimethoxyäthan; 4: 1,4-Dioxan

Beispiele 14 bis 16

Diese Beispiele zeigen die Weiterverarbeitung einiger der erfindungsgemäß erhaltenen Organozinntrichloride sowie des als Vergleichsprodukt hergestellten Chlorids (Beispiel 4) zu als Stabilisatoren für halogenhaltige Kunststoffe einsetzbaren Verbindungen.

Ein mit Rührer, Innenthermometer und Tropftrichter ausgestatteter 500-ml-Dreihalskolben wurde mit 25,6 g (0,2 Äquivalent Chlor) Organozinnchlorid aus Beispiel 1, 40,8 g (0,2 Mol) Thioglykolsäure-2-äthylhexylester und 200 ml Toluol beschickt, worauf auf 40 °C erwärmt wurde. Bei dieser Temperatur tropfte man innerhalb von 30 Minuten eine Lösung aus 20,2 g (0,2 Mol) Triäthylamin in 100 ml Toluol zu, wobei ein Niederschlag entstand. Nach weiterem zweistündigem Rühren bei 40 °C wurde der Niederschlag abgesaugt und das Filtrat am Rotationsverdampfer bei 80 °C/Wasserstrahlvakuum vom Toluol befreit. Es verblieb eine gelbliche, klare Flüssigkeit.

| | |
|---|---|
| Ausbeuten: | 27,4 g weißer, wasserlöslicher Niederschlag (Triäthylaminhydrochlorid) |
| | 59,0 g Organozinnstabilisator (Beispiel 14) |
| Analyse: | 13,3 % Zinn |

In gleicher Weise wurden 31,2 g (0,2 Äquivalent Chlor) Organozinnchlorid aus Beispiel 3 bzw. 24,0 g (0,2 Äquivalent Chlor) Organozinnchlorid aus Vergleichsbeispiel 4 mit Thioglykolsäure-2-äthylhexylester und Triäthylamin umgesetzt.

| | |
|---|---|
| Ausbeuten: | 64,8 g Organozinnstabilisator (Beispiel 15) |
| | 12,1 % Zinn |
| | 57,5 g Organozinnstabilisator (Beispiel 16) |
| | 13,4 % Zinn |

Beispiele 17 bis 20

Zur Prüfung der nach den Beispielen 14 bis 16 hergestellten Organozinnthioglykolate auf die stabilisierende Wirkung bei der Verarbeitung von Polyvinylchlorid und auf die Lichtdurchlässigkeit des mit diesen Stabilisatoren verarbeiteten PVC's wurde wie folgt vorgegangen:

Jeweils 100 Gew.-Teile eines Suspensions-Polyvinylchlorids vom K-Wert 68 wurden mit 0,4 Gew.-Teilen Calciumstearat, 0,4 Gew.-Teilen Kohlenwasserstoffwachs vom Tropfpunkt ca. 90 °C und einer jeweils 0,134 g Zinn entsprechenden Menge der Organozinnstabilisatoren innig vermischt.

Zur Bestimmung der Wärmestabilität wurden die Mischungen auf ein auf 180 °C beheiztes Labor-Zweiwalzwerk aufgetragen und bei einer Tourenzahl von 20 UpM innerhalb von 2 Minuten zu einem Fell verwalzt. Von diesem wurden in bestimmten Zeitabständen Proben entnommen, deren Farben mit denen einer internen Farbskala verglichen wurden. Die einzelnen Versuche liefen jeweils so lange, bis das Walzfell eine dunkelbraune bis schwarze Farbe angenommen hatte.

In der verwendeten Farbskala bedeuten die Wertzahlen

1 = wasserhell
2 = geringer Gelbstich
3 = starke Gelbfärbung
4 = tiefe, gelbbraune Farbe
5 = dunkelbraun bis schwarz

Zur Bestimmung der Transparenz wurden 10-Minuten-Walzfelle zu 0,5 mm und 2,0 mm dicken Platten gepreßt und deren Lichtdurchlässigkeit in einem ELREPHO-2-Gerät gemessen.

| Bsp. Nr. | Organozinnstabilisator | | | Verfärbung des Walzfelles bei einer Walzzeit von | | | | | Transparenz in % Lichtdurchlässigkeit | |
|---|---|---|---|---|---|---|---|---|---|---|
| | gem. Beisp. | Teile | = g Sn | 5' | 10' | 20' | 30' | 35' | 0,5 mm-Platte | 2,0 mm-Platte |
| | | | | auf Farbzahl | | | | | | |
| 17 | 14 | 1,01 | 0,134 | 1 | 1 | 2 | 3-4 | 5 | 79,7 | 47,1 |
| 18 | 15 | 1,11 | 0,134 | 1 | 1 | 2-3 | 3-4 | 5 | 83,2 | 46,3 |
| 19 (Vergleich) | 16 | 1,00 | 0,134 | 1 | 1 | 2 | 3-4 | 5 | 64,0 | 36,7 |
| 20 (Vergleich) | - | 0 | 0 | 3-4 | 5 | - | - | - | - | - |

Aus den Beispielen 17 bis 20 geht hervor, daß die aus den erfindungsgemäß erhaltenen Organozinnchloriden hergestellten Organozinnstabilisatoren der Beispiele 14 und 15 PVC ebenso gut stabilisieren wie der Vergleichsstabilisator des Beispiels 16. Gegenüber dem nur grundstabilisierten PVC (Beispiel 20) zeigen die mit den Organozinnverbindungen stabilisierten PVC-Felle eine wesentlich bessere Walzstabilität.

Die Transparenz von PVC-Fellen, die mit Substanzen auf Basis der erfindungsgemäß hergestellten Produkte erhalten wurden (Beispiele 17 und 18), ist wesentlich besser als die des Vergleichsbeispiels 19. Diese Erscheinung ist darauf zurückzuführen, daß in den Organozinnstabilisatoren der Beispiele 14 und 15 keine Polymeren (Polyitaconate) enthalten sind, während im Vergleichsstabilisator Beispiel 16 Poly-n-butylacrylat vorhanden ist.

Patentansprüche

1. Verfahren zur Herstellung von Organozinntrihalogeniden der allgemeinen Formel (I)

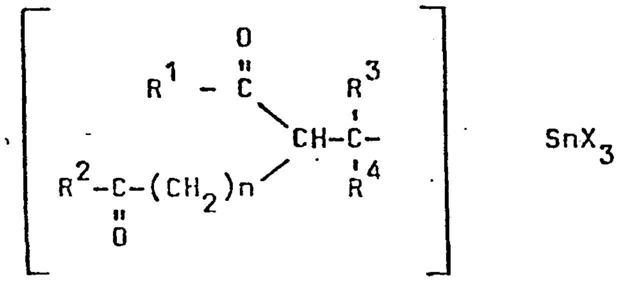

(I)

in der $R^1$ und $R^2$ gleich oder verschieden sind und die Bedeutung von OH, Halogen, $NH_2$, Alkylamino, Arylamino, O-Alkyl oder O-Aryl haben, wobei die beiden letztgenannten Reste auch aryl- bzw. alkylsubstituiert sein können und sowohl als solche als auch in der aryl- bzw. alkylsubstituierten Form als zusätzliche Substituenten noch Halogen oder eine Hydroxyl-, Thioäther-, Äther- und/oder Carboxyl-Gruppe tragen können,

$R^3$ und $R^4$ gleich oder verschieden sein können und die Bedeutung von 0 bis 2 Wasserstoffatomen sowie Alkylresten mit 1 bis 20 C-Atomen haben

n die Zahl 1, 2 oder 3 bedeutet und X für Chlor, Brom oder Jod steht, dadurch gekennzeichnet, daß man ein Olefin der Formel (II)

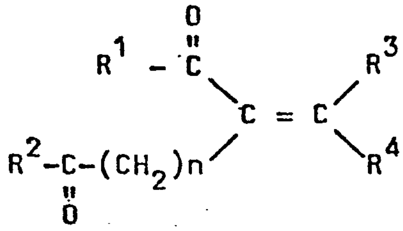

(II)

in der die Reste $R^1$ bis $R^4$ sowie n die oben angegebene Bedeutung haben, mit Zinn-II-halogenid und wäßrigem oder gasförmigem Halogenwasserstoff, gegebenenfalls in Gegenwart eines inerten Lösungsmittels bei Temperaturen zwischen etwa 0 und 150 °C miteinander umsetzt.

2. Verfahren nach Anspruch 1, dadurch gekennzeichnet, daß ein solches Olefin der Formel (II) eingesetzt wird, bei dem $R^1 = R^2$ = O-Alkyl mit 1 bis 40 C-Atomen und $R^3$ und $R^4$ = Wasserstoff ist und n für 1 steht, und man als Zinn-II-halogenid Zinn-II-chlorid und als Halogenwasserstoff Chlorwasserstoff verwendet.

3. Verwendung der Organozinntrichloride nach den Ansprüchen 1 und 2 als Ausgangsmaterial für die Herstellung von Organozinnstabilisatoren zum Stabilisieren halogenhaltiger Thermoplaste.

Europäisches Patentamt

# EUROPÄISCHER RECHERCHENBERICHT

0011280

Nummer der Anmeldung

EP 79 10 4476

## EINSCHLÄGIGE DOKUMENTE

| Kategorie | Kennzeichnung des Dokuments mit Angabe, soweit erforderlich, der maßgeblichen Teile | betrifft Anspruch |
|---|---|---|
| D | DE - A - 2 540 210 (AKZO GmbH)<br>* Seite 12, Anspruch 1; Seite 13, Anspruch 6 *<br>-- | 1-3 |
| P | EP - A - 0 000 747 (HOECHST AG)<br>* Ansprüche; Seite 1, Anspruch 1; Seite 7, Zeile 35 - Seite 8, Zeile 1 * | 1-3 |
| D | & DE - A - 2 735 757<br>---- | |

Der vorliegende Recherchenbericht wurde für alle Patentansprüche erstellt.

| Recherchenort | Abschlußdatum der Recherche | Prüfer |
|---|---|---|
| Den Haag | 21-02-1980 | SUTER |

KLASSIFIKATION DER ANMELDUNG (Int.Cl. 3)

C 07 F 7/22
C 08 K 5/57
C 08 L 27/00

RECHERCHIERTE SACHGEBIETE (Int. Cl. 3)

C 07 F 7/22

KATEGORIE DER GENANNTEN DOKUMENTE

- X: von besonderer Bedeutung
- A: technologischer Hintergrund
- O: nichtschriftliche Offenbarung
- P: Zwischenliteratur
- T: der Erfindung zugrunde liegende Theorien oder Grundsätze
- E: kollidierende Anmeldung
- D: in der Anmeldung angeführtes Dokument
- L: aus andern Gründen angeführtes Dokument
- &: Mitglied der gleichen Patentfamilie, übereinstimmendes Dokument